# EUROPEAN PATENT SPECIFICATION

(11) **EP 1 374 099 B1**
(45) Date of publication and mention of the grant of the patent: **22.07.2009**
(21) Application number: 02727971.0
(22) Date of filing: 27.03.2002
(51) Int. Cl.: G06F 17/30, H04M 15/00

(54) **PROCESSING TRANSACTIONS**
VERARBEITUNG VON TRANSAKTIONEN
TRANSACTIONS DE TRAITEMENT

(30) Priority: 30.03.2001 GB 0108038
(43) Date of publication of application: 02.01.2004
(73) Proprietor: Nokia Corporation, 02150 Espoo (FI)
(72) Inventor: RODRIGO, Anthony, FIN-00200 Helsinki (FI); MISTRONI, Marco, FIN-00530 Helsinki (FI)
(74) Representative: Slingsby, Philip Roy
(86) International application number: PCT/IB2002/002178
(87) International publication number: WO 2002/080032

(56) References cited:
- EP-A- 1 052 841
- WO-A-01/58110
- WO-A-97/40456
- WO-A-99/27556
- "Network Data Management - Usage (NDM-U) For IP-Based Services, Version 2.0" IPDR STANDARD, [Online] 9 October 2000 (2000-10-09), pages 1-106, XP002186384 Retrieved from the Internet: <URL:http://www.ipdr.org/documents/NDM-U_2 .0.pdf> [retrieved on 2001-12-21]
- BERT DEMPSEY; MATTHEW LUCAS: "IPDR Update: Standards Effort Moves from Usage to Provisioning" TELOSSOURCE MAGAZINE, [Online] April 2000 (2000-04), pages 43-48, XP002186385 Retrieved from the Internet: <URL:http://www.rateintegration.com/articl es/ipdr%20-%20ndm.pdf> [retrieved on 2001-12-21]
- "Business Case Study: Cable Network Operator" XACCT BUSINESS CASE STUDY, [Online] December 1999 (1999-12), pages 1-16, XP002186386 Retrieved from the Internet: <URL:http://www.xacct.com/documents/cablen etworkoperator.pdf> [retrieved on 2001-12-21]
- "OpenCon Communication Systems Announces Industry Breakthrough, Offering Industry's Only Billing Mediation Solution" OPENCON NEWS ARTICLE, [Online] 7 September 2000 (2000-09-07), page 1 XP002186387 Retrieved from the Internet: <URL:http://www.opencon.com/pages/pr_2000_ cdrviewer.htm> [retrieved on 2001-12-21]
- "White Paper On Billing for the New Public Network" OPENCON WHITE PAPER, [Online] 2000, pages 1-9, XP002186388 Retrieved from the Internet: <URL:http://www.opencon.com/download/bmp_w hitepaper.pdf> [retrieved on 2001-12-21]
- IPDR: "Network data Management - Usage (NDM-U) For IP-Based Services" IPDR SPECIFICATION, [Online] 24 March 2000 (2000-03-24), pages 1-54, Retrieved from the Internet: URL:www.ipdr.org/members/NDM-u_1.0.pdf>

## Description

The invention relates to a method of processing details of a mobile communication transaction, and an apparatus for performing such processing.

Within a mobile telecommunications network, there is a figurative area termed the service management space. The service management space refers to the parts of the network which control usage of the network in terms of, for example, capacity of particular network elements and authorisation of network subscribers to use particular services provided by the network. One important aspect of service management is the ability of the service management infrastructure to collect Call/Service Details Records (CDR/SDR) from different network elements that provide those services, and to feed them to a rating and billing (CCB) system. This is a requirement in order that the subscriber can be billed for the use of the services. One known protocol of transferring such records is FTP (file transfer protocol), which is complex when used with network services such as GPRS/3G (general packet radio service / third generation) or WAP (wireless application protocol).

Typically there are three different means of paying for services. The first is "prepaid", which means the subscriber has already paid for the services used and therefore the balance must be reduced as the services are consumed. An example of this is a "pay-as-you-go" mobile phone contract under which the subscriber can purchase credits up to a certain value, which are applied to his or her account, and then make calls or use other network services until all the credits are used, after which a bar is put on further outgoing use of the phone.

The second is "postpaid", which means the subscriber is billed at the end of each month. An example of this is a 12-month contract under which the subscriber is charged a fixed line rental intended to pay back the service provider for subsidising the subscriber's mobile phone, plus call charges. Some of the call charges may be covered by a "call bundle" arrangement whose balance must be reduced as call time is consumed, and it is possible that the call bundle will be used up in any one month and that therefore the subscriber will need to pay the remaining call charges. It is usual for the subscriber to be sent a monthly bill which can either be paid by cheque or debited directly from the subscriber's bank account.

The third is "direct pay" or "hot billing", which means the money is taken from the subscriber's credit card or debit card or similar as the services are consumed. This differs from a postpaid bill being debited directly from the subscriber's bank account in that charges are taken when used as opposed to being stored and collected together at the end of each month.

CDR's are obtained from network elements such as SGSNs and other switching elements. These network elements may be providing CDR's of subscribers of different network operators (different service providers / virtual operators) who are sharing the same network elements. Typically when CDR's are generated from the network elements, prepaid and postpaid CDR's or a roaming CDR received from another element from another network are sent together, thus making the task of sorting them at the CCB complex and time-consuming. For example, the CCB must determine the type of processing required, depending on the attributes of each CDR such as whether it is a prepaid or postpaid call, whether the subscriber is roaming and whether the CDR is valid. A CDR could be invalid if it has been generated erroneously. In known systems most of these operations are done when all the CDR's from different network elements arrive at the CCB, so the number of CDR's requiring processing at any one time can be in the hundreds of thousands or even millions. Processing of each CDR type can only be achieved by providing programs to carry out the processing. Hence the greater variety of CDR type, the more programs are required.

IPDR Update: Standards Effort Moves from Usage to Provisioning, Dempsey, Bert & Lucas, Matthew, Telossource Magazine, April 2000, page 43-48 describes an outline of the Internet Protocol Detail Records (IPDR) ad hoc standard.

Network Date Management - Usage (NDM-U) For IP-Based Services, Version 1.0, IPDR, Inc., March 24, 2000 describes a detailed framework of the systems to support an IPDR record format. EP 1,052,841 (Motorola Ireland Limited) describes a system and method for billing in a radio telecommunications network.

WO 01/58110 (McConnell, Richard et al) describes a network-based billing method and system.

It would be advantageous to provide a system, which allows efficient processing of CDR's and reliable transfer from network elements to CCBs. Ideally such a system would be usable with network elements owned and operated by different network providers and with network elements, which are used by more than one network provider. This would minimise the work required to integrate network elements to CCBs. It would also mean that less processing programs would be needed.

It would also be advantageous to improve the reliability of transferring CDR's to be processed by allowing routing to an alternative CCB in the case of a link or node failure. Time could be saved and efficiency improved If erroneous CDR's were discarded before being received by the CCB.

One particular problem which arises in the above-mentloned system is that It is necessary to recognise and process a prepaid CDR without delay and send it to the prepaid billing system. In order to ensure the balance Is updated quickly as possible. If this is not done, fraudulent use is a problem because the subscriber will be able to make more calls than the credits purchased should allow, since the call bar will not be put on the phone quickly enough to prevent further use. It would be advantageous to provide a system, which would allow priority processing of prepaid CDR's.

According to one aspect of the present invention there is provided a method of processing details of a mobile communication transaction for reception by a transaction receiving apparatus, the method comprising the steps of : associating each of a plurality of components with a different network element whereby each component Is associated with only one network element; each component reading transaction information from its associated network element; each component classifying the transaction Information in accordance with attributes of the transaction Information, wherein said classification determines how the transaction information Is subsequently processed; each component applying a style sheet transformation to the transaction Information to transform the transaction Information into processed information in a mark-up language format; and each component sending the processed information to a single transaction receiving apparatus; wherein the transaction information relates to the mobile communication transaction.

The method is useful if the transaction information comprises cost information. Convenlently the cost Information is obtained from call duration information, call destination information and stored tariff information. It is also advantageous for the transaction information to comprise an Indication of whether the cost of the mobile communication has been previously paid. The method will Ideally support any payment type.

Preferably the method comprises the further steps of, after reading the transaction Information: classifying the transaction as requiring either fast processing If the cost has been previously paid or otherwise slow processing; if the transaction requires slow processing, sending the transaction information to a preferred storage; and if the transaction requires fast processing, carrying out the step of applying a style sheet transformation and subsequently sending the processed information to the transaction receiving apparatus.

Advantageously the step of applying a style sheet transformation to the transaction information comprises the steps of : optionally discarding any parts of the Information which are not required; optionally performing calculations on the information; optionally manipulating attributes of the information; formatting the information into a form suitable for reception by the transaction receiving apparatus; and adding a destination address of the transaction receiving apparatus. Conveniently there is provided the further step of adding an alternative destination address of an alternative transaction receiving apparatus, wherein if an error occurs In the step of sending the processed Information to the transaction receiving apparatus, sending the processed information to the alternative transaction receiving apparatus.

Conveniently the mark-up language used in the method is XML and the style sheet transformation is XSL. Advantageously the processed information is sent over HTTP or GTP' but it could be sent over any other suitable protocol.

Usually the transaction receiving apparatus is a customer care and billing system. It could be another type of system such as an operational support system.

According to a another aspect of the present invention, there is provided a system for processing details of a mobile communication transaction for reception by a transaction receiving apparatus, the system comprising: a plurality of components, each component associated with a different network element, each component being associated with only one network element and each component comprising: a reader for reading transaction Information from the network element associated with the component; a classifier for classifying the transaction information in accordance with attributes of the transaction information, wherein said classification determines how the transaction information is subsequently processed; a transformer for applying a style sheet transformation to the transaction information to transform the transaction information into processed information in a mark-up language format; and a transmitter for sending the processed information to a transaction receiving apparatus; the system further comprising a transaction receiving apparatus for receiving processed information from the plurality of components; wherein the transaction information relates to the mobile communication transaction.

Suitably each component is in the form of a plug-in to its associated network element.

The method and apparatus of the invention can be achieved by configuration rules that are present. The configuration rules could be XSLT based, i.e. defined in XSL Sheets.

Therefore, various rules could be applied, e.g. addresses of different customer care and billing operations, depending on the type or service type contained within the CDR. Also, rules could be configured to address erroneously generated CDR's so as to either dump there or to redirect them to a particular CG with a specific tag.

An embodiment of the invention will now be described, by way of example only, with reference to the accompanying drawings in which:
Figure 1 is a diagrammatical representation of the components of a CDR and their interaction with a billing system.
Figure 2 is a general diagram of transfer of call detail information from network elements to a billing centre.
Figure 3 is a more detailed view of a part of the apparatus of figure 2.
Figure 4 is a more detailed view of another part of the apparatus of figure 2.

Within a wireless telecommunications network a Call Detail Record (CDR) is produced by a network element such as an SGSN (serving GPRS support node) of a GPRS network. Such a record is produced each time a subscriber makes a call or carries out some other transaction within the network. The purpose of such a record is to produce data to allow a subscriber to be billed for a provided service, such as use of the network to make a telephone call and/or to produce information for the network operator regarding its downstream applications such as customer care or planning of services. More specifically, CDR's are used for the following purposes :
- Measuring usage in specified units for the purpose of billing customers and maintaining records for all aspects of bill queries, collections, legal/regulatory requirements.
- Recording statistics for the purpose of fraud prevention activities.
- Measuring usage of network resources.
- Recording statistics on characteristics of network usage (location, time of day, session details, etc.).
- Recording statistics for quality assurance purposes.

Some transactions conducted by subscribers are chargeable events. These are broadly defined as activities utilising the telecommunications network infrastructure and related services, for which the network operator may charge a user. The cost of a chargeable event may cover the cost of sending, transporting, delivery and storage of information and possibly the cost of related signalling. Ideally, a CDR for a prepaid call should be delivered to the CCB within a minute after its occurrence.

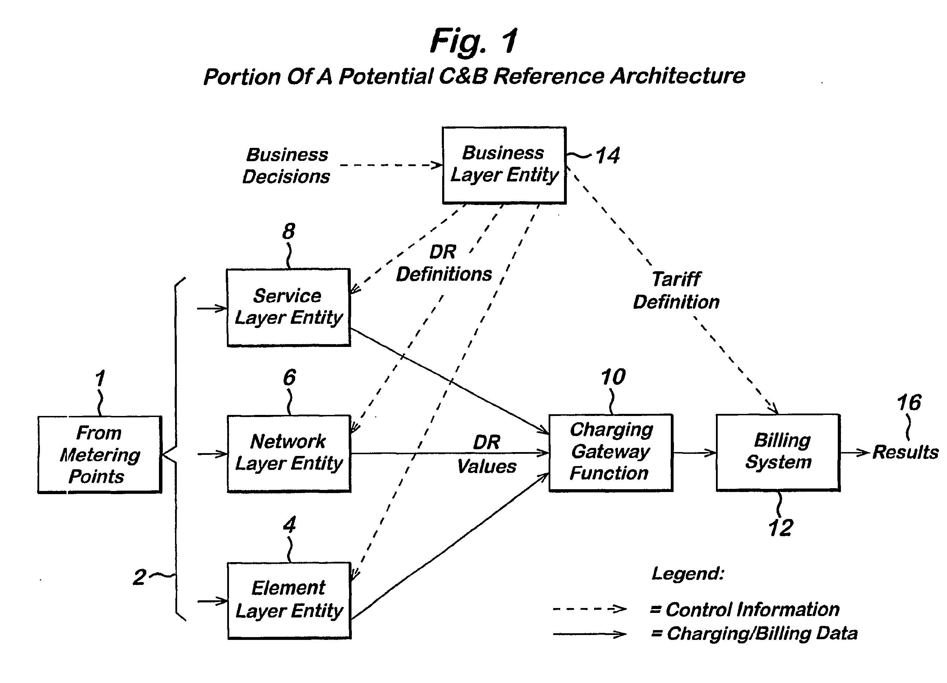

Figure 1 shows diagrammatically components which create CDR's and how CDR's are calculated. On the left hand side of the diagram, data input from a network element 1 is shown. This data is formulated by considering three components, as indicated by bracket 2 and its associated arrows. The components can be termed "layers".

The first component is element layer 4. This layer 4 contains data in respect of charges for wireless element usage, for example a charge for being connected to a switching element during a call. It also includes managing of network elements and co-ordination between them.

The second component is network layer 6. This layer 6 contains data in respect of charges for overall management of network elements in combination, including control and use of the network and network services. The data also includes statistics of use and demand, which means that the end points and/or path of the utilised elements can also play a role in charging. This can be important, for example, in assisting service operators to balance network usage.

The third component is service layer 8. This layer 8 represents charges levied according to the services rendered. That is, the content of the data may have a role in charging. For example, this layer contains data in respect of contractual services to customers, interaction with service providers and quality of service information.

It can be seen from figure 1 that the three data components 4, 6, 8 are fed to a charging gateway 10 from where they are passed to a billing system (CCB) 12. As indicated in the legend, the solid arrows from components 4, 6, 8 to 10 and from components 10 to 12 represent charging/billing data.

It can also be seen in figure 1 that there is a further component, indicated by reference numeral 14, which is the business layer. This receives and sends out control information as indicated by the dotted arrows. The purpose of layer 14 is overall management of billing and charging, making decisions on billing and charging and maintaining efficient use of available resources and services. Thus, business considerations impact charging. Therefore, layer 14 is shown to be receiving business decisions as input and to be outputting information to layers 4, 6, 8 as to the data which should be collected and sent to the billing system 12, that is it defines the CDR components. Layer 14 also sends tariff information directly to billing system 12 so that billing system 12 can combine this with the call data received from charging gateway 10 in order to produce results 16 for charging the subscriber.

In the embodiment, CDR's include at least the following components, although these may be subject to availability and need :
1. Requested Quality of Service (QoS) levels
2. Actual QoS levels
3. Session correlating ID; to allow linking of multiple CDR's generated for one access session,
4. User identity information; e.g., IMSI (international mobile station identity)
5. Terminal equipment information
6. Resource usage information - this can include availability of services and actual service used e.g. call forwarding
7. Time usages began
8. Time usage ended or duration of usage
9. Destination information, that is which CCB to be used
10. Location of mobile phone
11. Service type
12. Value added charges type
13. Orderly or disorderly de-activation (including reason)
14. Service options selected
15. Location of service origination
16. Subscription profile; e.g., prepaid vs. post paid

It can now be understood that CDR's are complex and therefore require efficient and intelligent processing within a network.

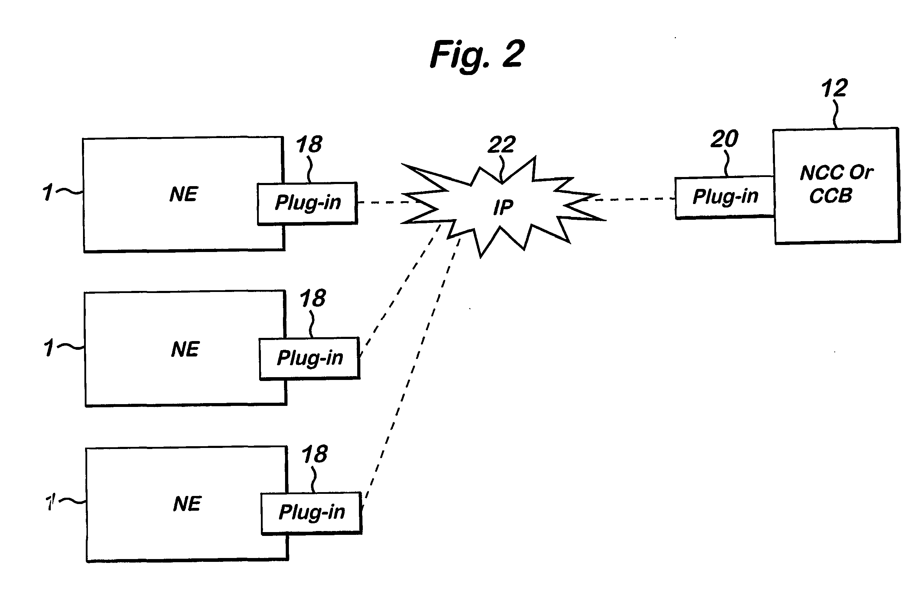

Referring now to figure 2, this shows a high level general diagram of an embodiment of the invention. Three network elements 1 are shown, although in practice there would be many more within a network. These produce CDR's containing the information described above, hence components 4, 6, 8, 14 are not shown in this figure but are assumed to contribute to the production of CDR's. The figure also shows billing system (CCB) 12. The embodiment of the invention is concerned with processing the CDR's of network elements 1 such that operation of CCB 12 is optimised.

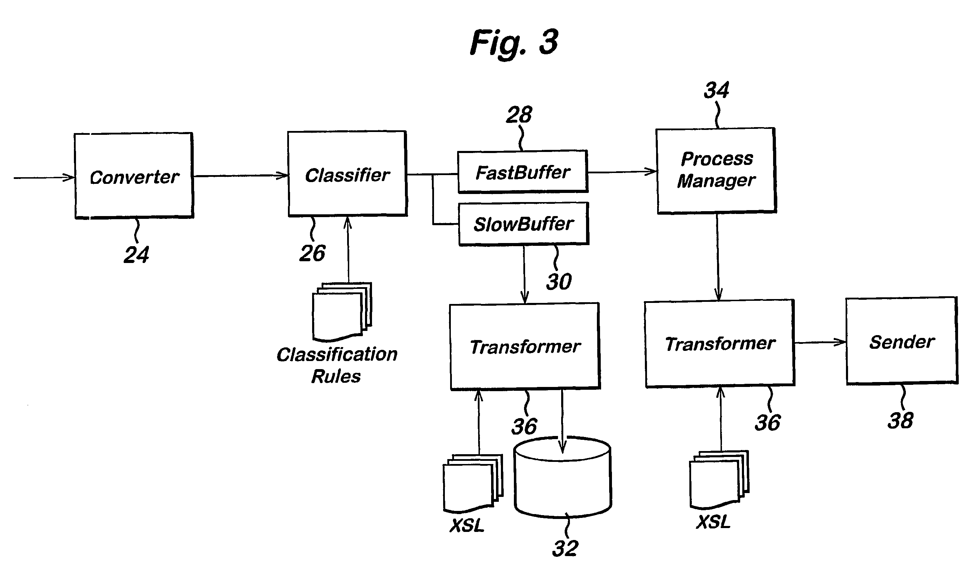

Each network element 1 is shown to have a plug-in 18. These plug-ins 18 are flexible components which can be attached to many different network elements. A more detailed functional description of them will be given below with respect to figure 3, but in general terms they can be a software or hardware add-on, for example additional coding or a microprocessor arrangement or similar containing one or more programs written, for example, in the C++ or Java languages. The idea is that the network element 1 calls its plug-in 18 each time a CDR is available and the plug-in carries out the necessary data processing in order to efficiently pass the CDR over the network using an appropriate protocol 22 to CCB 12. There is also provided a plug-in 20 for the CCB 12, which receives the CDR's and implements a call back function to write the CDR to a database or file.

Thus the plug-ins 18, 20 of figure 2 can be used for any network components without requiring modification of those by the network element manufacturers. The toolset will provide a hot-billing or normal billing plug-in.

The plug-ins 18, 20 are designed to be used with CDR's in Extensible Mark-up. Language (XML). XML is a computer language that is used to format data into a text file in an organised manner. Such files are easily generated and read by a computer. It uses tags of the form <word> to delimit pieces of data and attributes for putting values to tags. It is a W3C standard. Details of the XML standard and related standards are available from WWW.W3C.ORG. Other suitable mark-up languages could be used.

Turning now to figure 3, there is shown in more detail than figure 2 a block diagram of the architecture of the plug-in 18 on the network element side. A CDR is input to a converter 24 from a network element 1. This is connected to a classifier 26 which feeds into a fast buffer 28 and a slow buffer 30, the slow buffer 30 having a disc 32 associated with it. The fast buffer 28 is connected to a process manager 34, which feeds into a transformer 36. Finally there is provided a sender 38 for sending data to a CCB.

When a CDR is generated by a network element 1, the following process is carried out:
1. Network element 1 calls the Application Programming Interface (API), i.e. plug-in 18, with the CDR as an XML string containing the CDR attributes discussed above.
2. Upon arrival at plug-in 18, the CDR first passes into converter 24, in which it is converted to an internal format of plug-in 18. The Internal format is XML and the converter would be XSL. However, the converter would be applied only if the CDR format is NOT received as an XML document.
3. The internally formatted CDR is next sent to classifier 26. The classifier 26 reads and labels the CDR based on some key attributes, as to whether it should be processed in the fast buffer 28 or the slow buffer 30. One important example of such classification is the assessment of whether the CDR is from a prepaid transaction or not. If it is from a prepaid transaction, it is put into the fast buffer 28, otherwise it is generally put into the slow buffer 30, although of course the fast buffer 28 could be used if network capacity at that time allowed it. These classifications could be extended to more than two. The classifier can be also own plug-in Java or C++ class. Additional classes could be provided to extend the behaviour of the classifier.

This method can be utilized for more than just sending billing related information. For example if certain Operational Support Systems (OSS) requires usage/network statistics, the same method may be utilized to send selected information from the "original event" to the OSS systems.

This means it can perform "event/CDR splitting". I.e. the original event/CDR generated by the network element may be split in to multiple different events, and can classify them as OSS/Fast or OSS/Slow or CCB/Fast CDRs, for example. These secondary events are then written to the appropriate buffer. This essentially enables the ability to send the single event to multiple systems at different priority.

This functionality can be optionally switched on in the 'Classifier' module. In this case the Classifier will employ rules to determine how the incoming event should be split and how to classify the secondary events.
4. The classifier 26 writes the CDR to the relevant buffer 28 or 30. The buffer size may be configured. Any CDR's written to slow buffer 30 may be stored on disc 32 or another non-volatile storage means after processing if they are not to be used immediately.
5. In practice, a number of CDR's will be going through steps 1-4 in rapid succession. Therefore the next step is for the process manager 34 to read from one or both buffers 28, 30 a number of CDR's. The number can be configured. Reading occurs from the fast buffer 28 as a priority but if there is enough capacity, CDR's are additionally read from the slow buffer 30. The read CDR's are put into one XML string and pushed to the transformer 36.

As can be seen in figure 3, the transformer 36 uses Extensible Style-sheet Language (XSL). This is a language intended to be applied to XML files in order to format them into the style which was intended by the writer of the XML file. In this case, it is used to transform the CDR into a format suitable for use by the CCB. The format has the advantage of being human readable. Thus transformer 36 applies the correct XSL on the CDR(s) based on the attributes of them. The transformation step does some important things. Firstly it allows re-calculation of the values inside the CDR. The following code is an example of the transformations & re-calculations that are possible.

### 1. First calculation: Replace Service number with Service name

```
 <xsl:template match="Service">
 <xsl:variable name= "id" select="./@id" />
 <xsl:variable name="type" select="./@type"/>
 <xsl:copy>
 <!-- value of id attribute must be replaced depending on its value -->
 <xsl:attribute name="id">
 <xsl: choose>
 <xsl:when test="$id=10">Email</xsl:when>
 <xsl:when test="$id=12">Stack</xsl:when>
 <xsl:when test="$id=93">Stack</xsl:when>
 </xsl: choose>
 </xsl : attribute>
 <xsl:attribute name="type">
 <xsl:value-of select="$type"/>
 </xsl: attribute>
 </xsl:copy>
 </xsl :template>
```

### 2. Second Calculation: calculation over Uplink and Downlink attributes

```
 <xsl:template match="Uplink">
 <xsl:copy>
 <! -- New value is a calculation on the hvolume and content attributes -->
 <xsl:attribute name="data"><xsl:value-of select="(number(./@hvolume) * 1.2) div
 1024"/></xsl:attribute>
 <xsl:attribute name="content"><xsl:value-of select="(number(./@cvolume *6.1)
 div 1024"/></xsl:attribute>
 </xsl:copy>
 </xsl:template>
```

```
 <xsl:template match="Downlink">
 <! -- The output has to replace the two attributes with a new one (total_volume) -->
 <!-- Also here a calculation must be performed on hvolume and cvolume attributes--
 >
 <xsl:copy>
 <xsl:attribute name="total_volume"><xsl:value-of select="number(./@hvolume) +
 number(./@cvolume)"/></xsl:attribute>
 </xsl:copy>
 </xsl:template>
```

3. Replacing Price value with new value depending on the Service used

```
 <xsl:template match="Price/text()">
 <xsl:choose>
 <xsl:when test="../Service/@id=1">
 <xsl:value-of select="number(.)*2"/>
 </xsl:when>
 <xsl:when test="./Service/@id=10">
 <xsl:value-of select="number(.)*1.5/>
 </xsl:when>
 </xsl:choose>
 </xsl:template>
```

Secondly it reformats the CDR for use by the CCB. It can optionally drop certain attributes of the CDR or even the whole CDR if certain rules are met, for example if the CDR is erroneous, and it can optionally combine one or more attributes and write as a single attribute. This list is not exhaustive. All of these transformation rules are contained in the XSL for that CDR type. Finally, based on the CDR type it puts the destination Internet Protocol (IP) addresses onto the CDR, that is the CCB addresses. Two IP addresses are given so that if one fails, the other can be used. Hence this embodiment provides reliable transmission of CDR's.

The transformed CDR's are passed onto the sender 38 which transmits them to the CCB over HTTP or GTP' or other protocols, normally IP based protocols.

All the above-mentioned steps are run in RAM, with the exception of disk access made for CDR's stored in the slow buffer. Disk is also accessed to give persistence to fast CDR's in case the machine crashes. But this is not done per CDR.

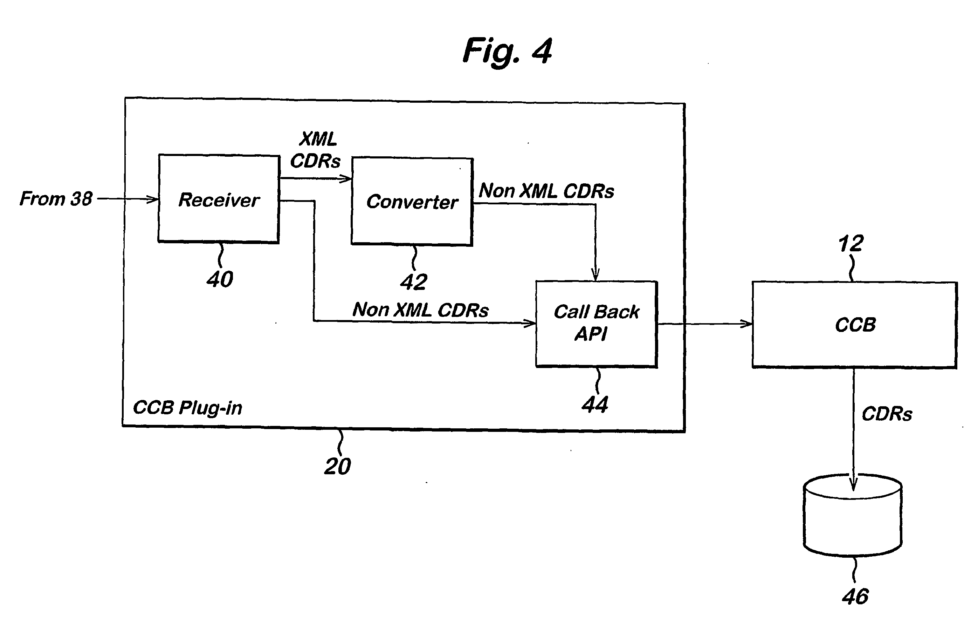

Figure 4 is a more detailed view of plug-in 20 for showing the process whereby upon receipt of the processed CDR's the CCB generates charges using tariff information. Plug-in 20 comprises a receiver 40, a converter 42 and a call-back module 44.

When the transformed CDRs are received from sender 38, they arrive at receiver 40. If they are received in CDR format, as per the described embodiment, they are passed onto converter 42. Converter 42 converts them from transformed XML format into native CDR format which is suitable for reception by the CCB 12. They are then transferred to call-back module 44. Any CDRs which are received already in native CDR format, for example if they have not undergone the process of the described embodiment, are transferred directly from receiver 40 to call-back module 44.

In order to retrieve a CDR from plug-in 20, CCB 12 calls plug-in 20. More specifically it calls call-back module 44, and upon receiving such a request, call-back module 44 transfers a CDR to CCB 12. It would be possible to transfer more than one CDR at a time as appropriate. CCB 12 is connected to a disk 46 in which it stores the received CDRs. They are stored in a convenient format, for example, by user identification. The stored CDRs can then be used to bill customers at the time appropriate to the type of billing system they are using.

Thus it can be seen that the embodiment uses a single protocol and tool to transform and transmit CDR's to the relevant CCB. This allows CDR's from transactions of different networks and originating from different network elements to be processed in the same way by providing straightforward plug-ins and hence saves a lot of work in integrating network components. The embodiment supports hot-billing and ensures that the most urgent CDR's get to the CCB as a priority. It considerably reduces the amount of processing required at the CCB, hence allowing billing to be carried out more quickly.

The system is also secure because it would be possible to encrypt the CDR's before sending to the CCB as the transport is IP based. The system is reliable because the organised processing and provision of more than one CCB address ensures delivery of data with no duplication or loss. It would be possible to send acknowledgements from the CCB to inform the sender 38 of successful delivery and provide mechanisms for the sender 38 to use to buffer and retransmit data if an acknowledgement is not received. In this case the CCB would be configured to be able to detect and discard duplicate CDR's.

## Claims

1. A method of processing details of a mobile communication transaction for reception by a transaction receiving apparatus (12), the method comprising the steps of :
associating each of a plurality of components with a different network element whereby each component Is associated with only one network element;
each component reading (24) transaction Information from Its associated network element;
each component classifying (26) the transaction information In accordance with attributes of the transaction information, wherein said classification determines how the transaction information Is subsequently processed;
each component applying (36) a style sheet transformation to the transaction Information to transform the transaction Information into processed information in a mark-up language format; and
each component sending (38) the processed information to a single transaction receiving apparatus;
wherein the transaction information relates to the mobile communication transaction.

2. A method according to claim 1, wherein the transaction Information comprises cost Information.

3. A method according to claim 2, wherein the cost information Is obtained from call duration Information, call destination information and stored tariff Information.

4. A method according to any preceding claim, wherein the transaction information comprises an Indication of whether the cost of the mobile communication has been previously paid.

5. A method according to claim 4, comprising the further steps of, after reading the transaction Information:
classifying (26) the transaction as requiring either fast processing (28) if the cost has been previously paid or otherwise slow processing (30);
if the transaction requires slow processing, carrying out the step of applying a style sheet transformation (36) and sending the transaction Information to a non-volatile storage (32); and
If the transaction requires fast processing, carrying out the step of applying a style sheet transformation (36) and subsequently performing the step of sending (38) the processed Information to the transaction receiving apparatus (12).

6. A method according to any preceding claim, wherein the step of applying a style sheet transformation to the transaction Information comprises the steps of :
optionally discarding any parts of the information which are not required;
optionally performing calculations on the information;
optionally manipulating and/or adding attributes of the information;
formatting the information into a form suitable for reception by the transaction receiving apparatus; and
adding a destination address of the transaction receiving apparatus.

7. A method according to claim 6, comprising the further step of adding an alternative destination address of an alternative transaction receiving apparatus, wherein if an error occurs in the step of sending the processed information to the transaction receiving apparatus, sending the processed information to the alternative transaction receiving apparatus.

8. A method according to any preceding claim, wherein the mark-up language is XML.

9. A method according to any preceding claim, wherein the style sheet transformation is XSL.

10. A method according to any preceding claim, wherein the processed Information is sent over HTTP or GTP'.

11. A method according to any preceding claim, wherein the transaction receiving apparatus (12) is a customer care and billing system or an operational support system.

12. A system for processing details of a mobile communication transaction for reception by a transaction receiving apparatus, the system comprising:
a plurality of components, each component associated with a different network element, each component being associated with only one network element and each component comprising:
a reader (24) for reading transaction information from the network element associated with the component;
a classifier (26) for classifying the transaction information in accordance with attributes of the transaction information, wherein said classification determines how the transaction Information is subsequently processed;
a transformer (36) for applying a style sheet transformation to the transaction Information to transform the transaction information into processed information in a mark-up language format; and
a transmitter (38) for sending the processed information to a transaction receiving apparatus (12); and the system further comprising:
a transaction receiving apparatus for receiving processed information from the plurality of components;
wherein the transaction information relates to the mobile communication transaction.

13. A system according to claim 12, wherein each component is in the form of a plug-in (18) to its associated network element (1).

## Patentansprüche

1. Verfahren zum Verarbeiten von Details einer Mobilkommunikationstransaktion zum Empfang durch eine Transaktionsempfangsvorrichtung (12), wobei das Verfahren die Schritte umfasst:
Zuordnen jeder einer Vielzahl von Komponenten einem unterschiedlichen Netzelement, wobei jede Komponente nur einem Netzelement zugeordnet ist;
wobei jede Komponente Transaktionsinformation von ihrem zugeordneten Netzelement liest (24);
wobei jede Komponente die Transaktionsinformation gemäß Attributen der Transaktionsinformation klassifiziert (26), wobei die Klassifikation bestimmt, wie die Transaktionsinformation anschließend verarbeitet wird;
wobei jede Komponente eine Stilvorlagentransformation auf die Transaktionsinformation anwendet (36), um die Transaktionsinformation in verarbeitete Information in einem Auszeichnungssprachenformat zu transformieren; und
wobei jede Komponente die verarbeitete Information zu einer einzelnen Transaktionsempfangsvorrichtung sendet (38);
wobei sich die Transaktionsinformation auf die Mobilkommunikationstransaktion bezieht.

2. Verfahren gemäß Anspruch 1, wobei die Transaktionsinformation Kosteninformation umfasst.

3. Verfahren gemäß Anspruch 2, wobei die Kosteninformation aus einer Anrufdauerinformation, Anrufzielinformation und gespeicherter Tarifinformation erhalten wird.

4. Verfahren gemäß einem der vorhergehenden Ansprüche, wobei die Transaktionsinformation eine Angabe umfasst, ob die Kosten der Mobilkommunikation vorher bezahlt worden sind.

5. Verfahren gemäß Anspruch 4, welches die weiteren Schritte umfasst, nach Lesen der Transaktionsinformation:
Klassifizieren (26) der Transaktion, dass sie entweder eine schnelle Verarbeitung (28) benötigt, falls die Kosten vorher bezahlt wurden oder ansonsten langsames Verarbeiten (30);
falls die Transaktion ein langsames Verarbeiten benötigt, Ausführen des Schritts des Anwendens einer Stilvorlagentransformation (36) und Senden der Transaktionsinformation zu einem nichtflüchtigen Speicher (32); und
falls die Transaktion ein schnelles Verarbeiten benötigt, Ausführen des Schritts des Anwendens einer Stilvorlagentransformation (36) und anschließendes Durchführen des Schritts des Senden (38) der verarbeiteten Information zur Transaktionsempfangsvorrichtung (12).

6. Verfahren gemäß einem der vorhergehenden Ansprüche, wobei der Schritt des Anwendens einer Stilvorlagentransformation auf die Transaktionsinformation die Schritte umfasst:
optionales Verwerfen beliebiger Teile der Information, die nicht benötigt werden;
optionales Durchführen von Berechnungen auf der Information;
optionales Manipulieren und/oder Hinzufügen von Attributen der Information;
Formatieren der Information in eine Form, die geeignet ist zum Empfang durch die Transaktionsempfangsvorrichtung; und
Hinzufügen einer Zieladresse der Transaktionsempfangsvorrichtung.

7. Verfahren gemäß Anspruch 6, welches ferner den Schritt des Hinzufügens einer alternativen Zieladresse zu einer alternativen Transaktionsempfangsvorrichtung umfasst, wobei, falls ein Fehler beim Schritt des Sendens der verarbeiteten Information zur Transaktionsempfangsvorrichtung auftritt, Senden der verarbeiteten Information zur alternativen Transaktionsempfangsvorrichtung.

8. Verfahren gemäß einem der vorhergehenden Ansprüche, wobei die Auszeichnungssprache XML ist.

9. Verfahren gemäß einem der vorhergehenden Ansprüche, wobei die Stilvorlagentransformation XSL ist.

10. Verfahren gemäß einem der vorhergehenden Ansprüche, wobei die verarbeitete Information über HTTP oder GTP' gesendet wird.

11. Verfahren gemäß einem der vorhergehenden Ansprüche, wobei die Transaktionsempfangsvorrichtung (12) ein Kundenbetreuungs- und Abrechungssystem oder eine Betriebsunterstützungssystem ist.

12. System zum Verarbeiten von Details einer Mobilkommunikationstransaktion zum Empfang durch eine Transaktionsempfangsvorrichtung, wobei das System umfasst:
eine Vielzahl von Komponenten, wobei jede Komponente einem anderen Netzelement zugeordnet ist, wobei jede Komponente nur einem Netzelement zugeordnet ist und jede Komponente umfasst:
einen Leser (24) zum Lesen von Transaktionsinformation aus dem Netzelement, das der Komponente zugeordnet ist;
einen Klassifizierer (26) zum Klassifizieren der Transaktionsinformation gemäß Attributen der Transaktionsinformation, wobei die Klassifikation bestimmt, wie die Transaktionsinformation anschließend verarbeitet wird;
einen Transformierer (36) zum Anwenden einer Stilvorlagentransformation auf die Transaktionsinformation, um die Transaktionsinformation in verarbeitete Information in einem Auszeichnungssprachenformat zu transformieren; und
einen Sender (38) zum Senden der verarbeiteten Information zu einer Transaktionsempfangsvorrichtung (12); und
wobei das System ferner umfasst:
eine Transaktionsempfangsvorrichtung zum Empfangen verarbeiteter Information aus der Vielzahl von Komponenten;
wobei sich die Transaktionsinformation auf die Mobilkommunikationstransaktion bezieht.

13. System gemäß Anspruch 12, wobei jede Komponente in der Form eines Plug-in (18) zu seinem zugeordneten Netzelement (1) ist.

## Revendications

1. Procédé de traitement d'informations concernant une transaction de communication mobile destinée à être reçue par un appareil de réception de transaction (12), le procédé comprenant les étapes consistant à :
associer chacun d'une pluralité de composants à un élément de réseau différent, moyennant quoi chaque composant est associé à seulement un élément de réseau ;
chaque composant lisant (24) des informations de transaction à partir de son élément de réseau associé ;
chaque composant classifiant (26) les informations de transaction conformément à des attributs des informations de transaction, dans lequel ladite classification détermine la manière dont les informations de transaction sont traitées par la suite ;
chaque composant appliquant (36) une transformation de feuille de style aux informations de transaction pour transformer les informations de transaction en informations traitées dans un format de langage de balisage ; et
chaque composant envoyant (38) les informations traitées à un appareil de réception de transaction unique ;
dans lequel les informations de transaction se rapportent à la transaction de communication mobile.

2. Procédé selon la revendication 1, dans lequel les informations de transaction comprennent des informations de coût.

3. Procédé selon la revendication 2, dans lequel les informations de coût sont obtenues à partir d'informations de durée d'appel, d'informations de destination d'appel et d'information de tarif stockées.

4. Procédé selon une quelconque revendication précédente, dans lequel les informations de transaction comprennent une indication indiquant si le coût de la communication mobile a été payé auparavant.

5. Procédé selon la revendication 4, comprenant les étapes supplémentaires consistant à, après avoir lu les informations de transaction :
classifier (26) la transaction comme nécessitant un traitement rapide (28) si le coût a été payé auparavant, ou sinon un traitement lent (30) ;
si la transaction nécessite un traitement lent, exécuter les étapes consistant à appliquer une transformation de feuille de style (36) et envoyer les informations de transaction à un stockage non volatil (32) ; et
si la transaction nécessite un traitement rapide, exécuter l'étape consistant à appliquer une transformation de feuille de style (36) et par la suite réaliser l'étape consistant à envoyer (38) les informations traitées à l'appareil de réception de transaction (12).

6. Procédé selon une quelconque revendication précédente, dans lequel l'étape consistant à appliquer une transformation de feuille de style aux informations de transaction comprend les étapes consistant à :
facultativement éliminer toute partie des informations qui n'est pas nécessaire ;
facultativement réaliser des calculs sur les informations ;
facultativement manipuler et/ou ajouter des attributs des informations ;
formater les informations en une forme appropriée pour être reçue par l'appareil de réception de transaction ; et
ajouter une adresse de destination de l'appareil de réception de transaction.

7. Procédé selon la revendication 6, comprenant l'étape supplémentaire consistant à ajouter une autre adresse de destination d'un autre appareil de réception de transaction, dans lequel, si une erreur se produit dans l'étape consistant à envoyer les informations traitées à l'appareil de réception de transaction, les informations traitées sont envoyées à l'autre appareil de réception de transaction.

8. Procédé selon une quelconque revendication précédente, dans lequel le langage de balisage est XML.

9. Procédé selon une quelconque revendication précédente, dans lequel la transformation de feuille de style est XSL.

10. Procédé selon une quelconque revendication précédente, dans lequel les informations traitées sont envoyées par HTTP ou GTP'.

11. Procédé selon une quelconque revendication précédente, dans lequel l'appareil de réception de transaction (12) est un système d'assistance à la clientèle et de facturation ou un système de support d'exploitation.

12. Système destiné à traiter des informations concernant une transaction de communication mobile destinée à être reçue par un appareil de réception de transaction, le système comprenant :
une pluralité de composants, chaque composant étant associé à un élément de réseau différent, chaque composant étant associé à seulement un élément de réseau et chaque composant comprenant :
un lecteur (24) destiné à lire des informations de transaction à partir de l'élément de réseau associé au composant ;
un dispositif de classification (26) destiné à classifier les informations de transaction conformément à des attributs des informations de transaction, dans lequel ladite classification détermine la manière dont les informations de transaction sont traitées par la suite ;
un dispositif de transformation (36) destiné à appliquer une transformation de feuille de style aux informations de transaction pour transformer les informations de transaction en informations traitées dans un format de langage de balisage ; et
un émetteur (38) destiné à envoyer les informations traitées à un appareil de réception de transaction (12) ; et
le système comprenant en outre ;
un appareil de réception de transaction destiné à recevoir des informations traitées à partir de la pluralité de composants ;
dans lequel les informations de transaction se rapportant à la transaction de communication mobile.

13. Système selon la revendication 12, dans lequel chaque composant est sous forme de plugiciel (18) par rapport à son élément de réseau associé (1).
